# EUROPEAN PATENT APPLICATION

(11) **EP 4 029 676 A1**
(43) Date of publication of application: **20.07.2022**
(21) Application number: 21816295.6
(22) Date of filing: 11.11.2021
(51) Int. Cl.: B29C 64/165, B29C 64/205, B29C 64/35, B29C 64/357, B08B 3/04, B08B 1/00, B29C 64/25, B29C 64/245, B33Y 10/00, B33Y 30/00

(54) **BINDER JET 3D PRINTER**

(30) Priority: 19.11.2020 KR 20200155943
(71) Applicant: SFS CO., LTD., Ulsan 44776 (KR)
(72) Inventor: BAE, Sungwoo, Nam-gu, Ulsan 44656 (KR); KIM, Haejeong, Nam-gu, Ulsan 44623 (KR)
(74) Representative: Isarpatent
(86) International application number: PCT/KR2021/016381
(87) International publication number: WO 2022/108228

(57) **Abstract**

Disclosed is a binder jet 3D printer. According to the present invention, the binder jet 3D printer includes: an object forming chamber open on top thereof to form an internal space and having an object forming stage ascendable and descendable in the internal space to laminate powder to a plurality of layers through a binder jetted from a printing part; a powder applying part for applying the powder from a hopper onto the object forming stage; a powder collecting part disposed on the front side of the object forming chamber along a powder applying direction of the powder applying part to collect residual powder after application of the powder through the powder applying part has been finished; and a maintenance part for cleaning the printing part and having a head cleaner and a module cleaner, wherein the module cleaner includes a binder chamber for storing the binder, a first cleaning solution chamber for storing a first cleaning solution, a first line through which the binder is supplied to print head modules of the printing part, a second line through which the first cleaning solution is supplied to the print head modules, and valves mounted on the first line and the second line, respectively to selectively open and close the first line and the second line.

## Description

### [Technical Field]

The present invention relates to a 3D printer, and more specifically, to a binder jet 3D printer.

### [Background Art]

Generally, a 3D printer is a device for making a three-dimensional object from a 3D drawing. At the early stage of 3D printer development, the 3D printer is used to make objects for limited purposes using plastic materials, but recently, the 3D printer makes use of various print materials such as metals, ceramics, nylons, and the like. Through the 3D printer, accordingly, various products such as cell phone cases, automobile accessories, and the like are created so that the 3D printer becomes increasingly applied to overall industrial fields.

Most of industrial metal 3D printers adopt selective laser sintering (SLS) in which metal powder is first applied and only a desired portion of the applied metal powder is melted by a laser to create a solid object. The SLS technology can make relatively sophisticated objects, but hard to make large scale objects and exhibit a slow production speed. Accordingly, binder jet printing has been recently emerged, and the binder jet printing is a process in which metal or plastic powder is applied onto an object forming stage inside an object forming chamber and a binder is jetted on a desired portion of the applied powder to create a 3D object. Advantageously, the binder jet printing can create a lot of objects at a time at a relatively fast speed and cannot have any limitations in the sizes of objects.

However, a binder jet 3D printer has some problems when nozzles of print heads are blocked with foreign matters sticking thereto such as fine powder during printing or when an amount of liquid material jetted from the nozzles is varied, and accordingly, the solid object created through the 3D printer may have low precision and strength.

In the case where cleaning for print head modules is needed to exchange the binder with another binder, further, the print heads have to be separated from the print head modules, thereby making the cleaning inconveniently carried out and failing to achieve perfect cleaning.

In a process of collecting residual powder after the powder has been applied to the object forming stage, moreover, a large amount of dust may be generated, and besides, the dust sticks to the nozzles of the print heads, thereby causing the above-mentioned problems more frequently than before. Accordingly, there is a definite need to develop a new binder jet 3D printer capable of solving the problems the conventional technologies have had.

### [Disclosure]

### [Technical Problem]

Accordingly, the present invention has been made in view of the above-mentioned problems occurring in the related art, and it is an object of the present invention to provide a binder jet 3D printer that is capable of easily and perfectly cleaning interiors of print head modules.

It is another object of the present invention to provide a binder jet 3D printer that is capable of easily and perfectly cleaning print heads.

It is yet another object of the present invention to provide a binder jet 3D printer that is capable of preventing residual powder being dropped to a powder collecting container from scattering when the residual powder is collected to the powder collecting container after powder application to an object forming stage through a powder applying part has been finished.

The technical problems to be achieved through the present invention are not limited as mentioned above, and other technical problems not mentioned herein will be obviously understood to one of ordinary skill in the art through the following description.

### [Technical Solution]

To accomplish the above-mentioned objects, according to one aspect of the present invention, there is provided a binder jet 3D printer including: an object forming chamber open on top thereof to form an internal space and having an object forming stage ascendable and descendable in the internal space to laminate powder to a plurality of layers through a binder jetted from a printing part; a powder applying part for applying the powder from a hopper onto the object forming stage; a powder collecting part disposed on the front side of the object forming chamber along a powder applying direction of the powder applying part to collect residual powder after application of the powder through the powder applying part has been finished; and a maintenance part for cleaning the printing part and having a head cleaner and a module cleaner, wherein the module cleaner may include a binder chamber for storing the binder, a first cleaning solution chamber for storing a first cleaning solution, a first line through which the binder is supplied to print head modules of the printing part, a second line through which the first cleaning solution is supplied to the print head modules, and valves mounted on the first line and the second line, respectively to selectively open and close the first line and the second line.

According to the present invention, desirably, the head cleaner may include a wiping part having a tank for storing a second cleaning solution and having an inlet and an outlet, wipers selectively submerged into the second cleaning solution, and a solution supplier for supplying the second cleaning solution to the tank through the inlet.

According to the present invention, desirably, the outlet is formed above the inlet.

According to the present invention, desirably, the head cleaner may include a packing part having a packing box open on top thereof, a packing cover ascendably and descendably disposed inside the packing box and coming into close contact with the surfaces of the print heads when ascended, and a supplier for supplying a third cleaning solution to the packing cover.

To accomplish the above-mentioned objects, according to another aspect of the present invention, there is provided a binder jet 3D printer including: an object forming chamber open on top thereof to form an internal space and having an object forming stage ascendable and descendable in the internal space to laminate powder to a plurality of layers through a binder jetted from a printing part; a powder applying part for applying the powder from a hopper onto the object forming stage; a powder collecting part disposed on the front side of the object forming chamber along a powder applying direction of the powder applying part to collect residual powder after application of the powder through the powder applying part has been finished; and a maintenance part for cleaning the printing part, wherein the powder collecting part may include a powder collecting container mounted on the front side of the object forming chamber and open on top thereof, a guide having one end mounted on an inner surface of the powder collecting container and the other end spaced apart from an opposing surface to the inner surface of the powder collecting container, while having a downward inclination, and an elastic member located underneath the guide and having one end mounted on the inner surface of the powder collecting container and the other end coming into close contact with the opposing surface of the powder collecting container.

According to the present invention, desirably, the other end of the elastic member is varied in position according to the weight of the residual powder accumulated on top thereof to allow the residual powder to be dropped to the powder collecting container and, after the residual powder is dropped, the other end of the elastic member is returned to an original position thereof and comes into close contact with the opposing surface of the powder collecting container.

According to the present invention, desirably, the elastic member is a plate made of a rubber material.

### [Advantageous Effects]

According to the present invention, the binder jet 3D printer has the following advantages.

The binder jet 3D printer can easily and perfectly clean the interiors of the print head modules.

In this case, the binder and the cleaning solution can be selectively supplied to the interiors of the print head modules through the selective operations of the valves, thereby easily performing switching between printing and cleaning.

In this case, further, the cleaning solution can be supplied directly to the interiors of the print head modules to clean them, thereby obtaining excellent cleaning results and improving the lifespans of the print head modules and the print heads.

According to the present invention, the binder jet 3D printer can easily and perfectly clean the print heads.

In this case, the surfaces of the print heads are automatically packed, and even during wiping, the cleaning solution can be automatically exchanged, thereby conveniently and rapidly cleaning the surfaces of the print heads.

Furthermore, the packing cover serves to pack the print heads, while the cleaning solution is successively supplied thereto, thereby preventing the surfaces of the print heads from being dried.

Moreover, the cleaning solution is consistently maintained to a given level in the tank where the wipers are submerged, thereby making the wiping simply carried out and perfectly cleaning the print heads.

According to the present invention, the binder jet 3D printer can prevent the residual powder being dropped to the powder collecting container from scattering when the residual powder is collected to the powder collecting container after the powder application to the object forming stage through the powder applying part has been finished.

Even in the case where the powder collecting container has a high depth, the residual powder can be prevented from scattering through a relatively simple structure when dropped to the powder collecting container.

As the residual powder does not scatter during the collection, further, other components like the print heads can be prevented from being contaminated due to the residual powder.

The effects of the present invention are not limited thereto, and other effects of the present invention will be clearly understood to those skilled in the art from the following description.

### [Description of Drawings]

FIG. 1 is a perspective view showing a binder jet 3D printer according to the present invention.
FIG. 2 is a perspective view showing main parts of the binder jet 3D printer according to the present invention.
FIG. 3 is a schematic view showing a maintenance part of the binder jet 3D printer according to the present invention.
FIGs. 4a and 4b are schematic views showing operations of a module cleaner of the binder jet 3D printer according to the present invention.
FIG. 5 is a schematic perspective view showing a head cleaner of the binder jet 3D printer according to the present invention.
FIGs. 6a and 6b are schematic views showing a packing part of the binder jet 3D printer according to the present invention.
FIGs. 7a and 7b are schematic views showing a purging part of the binder jet 3D printer according to the present invention.
FIGs. 8a and 8b are schematic views showing a wiping part of the binder jet 3D printer according to the present invention.
FIG. 9 is a schematic perspective view showing a testing part of the binder jet 3D printer according to the present invention.
FIGs. 10a to 11b are schematic views showing a powder collecting part of the binder jet 3D printer according to the present invention.
FIGs. 12a to 12c are schematic views showing operations of the powder collecting part of the binder jet 3D printer according to the present invention.

### [Mode for Invention]

The present invention may be modified in various ways and may have several exemplary embodiments. Specific exemplary embodiments of the present invention are illustrated in the drawings and described in detail in the detailed description. Objects, characteristics and advantages of the present invention will be more clearly understood from the detailed description as will be described below and the attached drawings. However, this does not limit the invention within specific embodiments and it should be understood that the invention covers all the modifications, equivalents, and replacements within the idea and technical scope of the invention.

Terms, such as the first, and the second, may be used to describe various elements, but the elements should not be restricted by the terms. The terms are used to only distinguish one element from the other element. For example, a first element may be named a second element without departing from the scope of the present invention. Likewise, a second element may be named a first element. An expression referencing a singular value additionally refers to a corresponding expression of the plural number, unless explicitly limited otherwise by the context. In this application, terms, such as "comprise", "include", or 'have", are intended to designate those characteristics, numbers, steps, operations, elements, or parts which are described in the specification, or any combination of them that exist, and it should be understood that they do not preclude the possibility of the existence or possible addition of one or more additional characteristics, numbers, steps, operations, elements, or parts, or combinations thereof.

In the description, the thicknesses of the lines or the sizes of the components shown in the drawing may be magnified for the clarity and convenience of the description. Therefore, they should be defined on the basis of the whole scope of the present invention.

Hereinafter, the present invention is disclosed with reference to the attached drawings wherein the corresponding parts in the embodiments of the present invention are indicated by corresponding reference numerals and the repeated explanation on the corresponding parts will be avoided.

The present invention relates to a binder jet 3D printer that is capable of easily and perfectly cleaning interiors of print head modules and print heads and capable of preventing residual powder being dropped to a powder collecting container from scattering when the residual powder is collected to the powder collecting container after powder application to an object forming stage through a powder applying part has been finished.

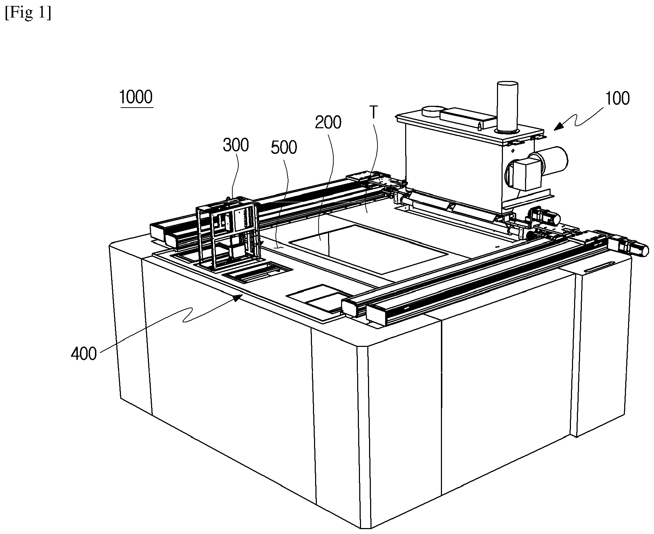

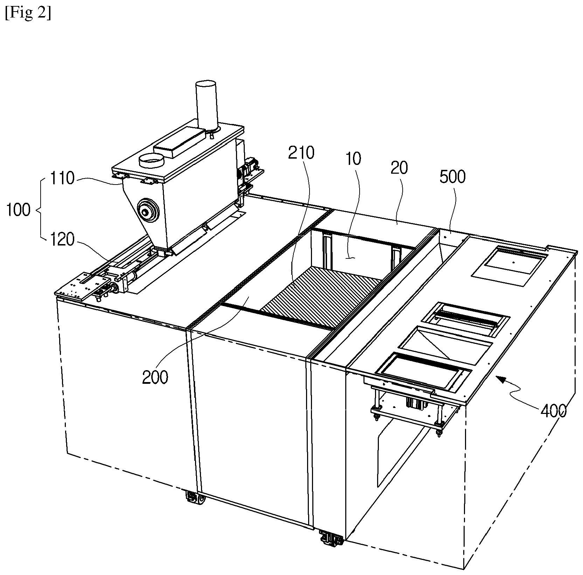

FIG. 1 is a perspective view showing a binder jet 3D printer according to the present invention, and FIG. 2 is a perspective view showing main parts of the binder jet 3D printer according to the present invention.

The binder jet 3D printer 1000 according to the present invention includes a powder applying part 100, an object forming chamber 200, a printing part 300, a maintenance part 400, and a powder collecting part 500.

According to the present invention, the powder applying part 100, the object forming chamber 200, the printing part 300, the maintenance part 400, and the powder collecting part 500 are disposed on a frame (not shown). The frame has a structure with an object forming chamber housing 10 disposed therein to accommodate the object forming chamber 200 therein and a working table 20 mounted on top thereof to install the powder applying part 100 and the printing part 300 thereon. The working table 20 has an opening formed at a position corresponding to the object forming chamber housing 10 to have the shape corresponding to the top of the object forming chamber 200. Further, first and second linear motion (LM) guides are disposed on both sides of the opening to movably support LM guides that indirectly support the powder applying part 100 and the printing part 300 forwardly and backwardly.

The powder applying part 100 includes a hopper 110 and a recoater 120.

The hopper 110 serves to supply the powder stored therein to the recoater 120, and the recoater 120 receives the powder from the hopper 110, moves in one direction, applies the powder to top of the working table 20 and an object forming stage 210, and moves in a reverse direction to flatten the powder to a regular height. According to the present invention, a roller type of recoater 120 is used, but of course, a blade type of recoater may be used. The hopper 110 and the recoater 120 are well known in this art, and therefore, an explanation on them will be avoided.

The object forming chamber 200 is accommodated in the object forming chamber housing 10 and has the shape of a box open on top thereof to form an internal space in which the powder is received to create a solid object. The object forming chamber 200 is mounted or demounted to the form of a rail in or from the object forming chamber housing 10 of the frame. An opening of the frame has the shape corresponding to the top of the object forming chamber 200, and if the object forming chamber 200 is accommodated in the object forming chamber housing 10, the top of the object forming chamber 200 is in an open state.

The object forming stage 210 is accommodated in the object forming chamber 200. The object forming stage 210 is ascendable and descendable in the interior of the object forming chamber 200. The object forming stage 210 is initially ascended up to a height of the opening of the working table 20, and as the powder and a binder are alternately laminated by means of the powder applying part 100 and the printing part 300, the object forming stage 210 is descended. A large amount of powder may be accumulated in the object forming chamber 200 later.

Through the binder jetted from the printing part 300, the powder is laminated on the object forming stage 210 to form a plurality of layers constituting sectional layers of the solid object, so that the solid object is finally created. To obtain excellent precision of the solid object, in this case, the alignment of the object forming chamber 200 and the sealing structure of the object forming chamber 200 are important. However, the object forming chamber 200 and the object forming stage 210 are well known in this art, and therefore, an explanation on them will be avoided.

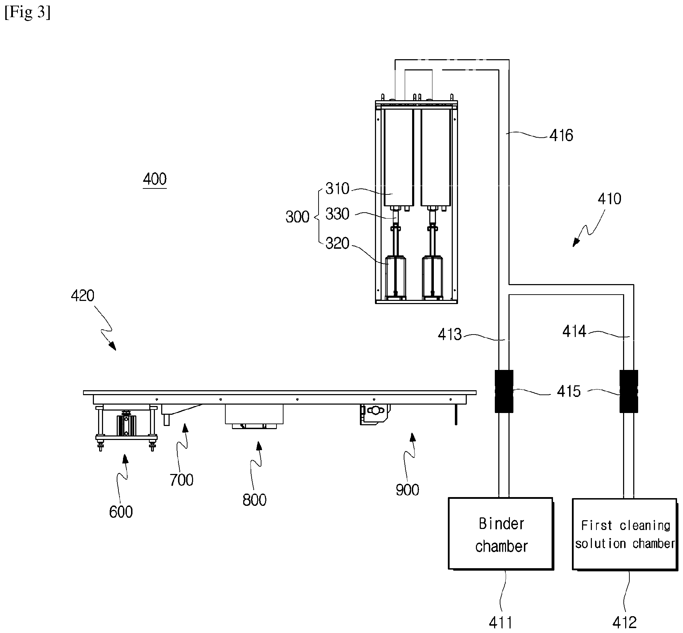

FIG. 3 is a schematic view showing the maintenance part of the binder jet 3D printer according to the present invention.

The maintenance part 400 serves to clean the printing part 300. According to the present invention, the maintenance part 400 includes a module cleaner 410 and a head cleaner 420.

The printing part 300 includes print head modules 310 and print heads 320. Each print head module 310 receives the binder from a binder chamber 411 as will be discussed later and transfers the binder to the print head 320, and each print head 320 serves to jet the binder from a nozzle located on the surface thereof.

When the binder chamber 411 supplies the binder, the supply of the binder is performed using pneumatic pressure, but if the binder is directly supplied to the print head 320, it is hard to supply a constant amount of binder due to variations of the pneumatic pressure, air, and the like. Accordingly, a reservoir is disposed in the print head module 310 to temporarily store the binder, and after the temporary storage, the binder is supplied to the print head 320. In this case, the reservoir serves as a kind of buffer to thus supply a constant amount of binder to the print head module 310. Further, the print head module 310 has a substrate for controlling the print head 320 and a pump for supplying the binder to the print head 320. The print head module 310 and the print head 320 are connected to each other by means of a tube 330 so that the binder in the reservoir can be supplied to the print head 320. In this case, cleaning for the interiors of the print head modules 310 is needed periodically or when the binder is exchanged with another type of binder.

The module cleaner 410 serves to clean the interiors of the print head modules 310. According to the present invention, the module cleaner 410 includes the binder chamber 411, a first cleaning solution chamber 412, a first line 413, a second line 414, and valves 415.

According to the present invention, one kind of binder and one kind of first cleaning solution are exemplarily used.

The binder chamber 411 serves to store the binder to be jetted through the print heads 320, and the first cleaning solution chamber 412 serves to store a first cleaning solution for cleaning the print head modules 310. An integration line 416 is connected to the print head modules 310, and the first line 413 and the second line 414 are branched from the integration line 416. The first line 413 is connected to the binder chamber 411, and the second line 414 to the first cleaning solution chamber 412. The valves 415 are mounted on the first line 413 and the second line 414, respectively.

As air is supplied to the binder chamber 411 and the first cleaning solution chamber 412, by means of the pneumatic pressure, the binder is supplied along the first line 413 and the integration line 416 to the print head modules 310 and the first cleaning solution is supplied along the second line 414 and the integration line 416 to the print head modules 310. In this case, the valves 415 are selectively open and closed so that if the first line 413 is open, the second line 414 is closed and if the second line 414 is open, the first line 413 is closed.

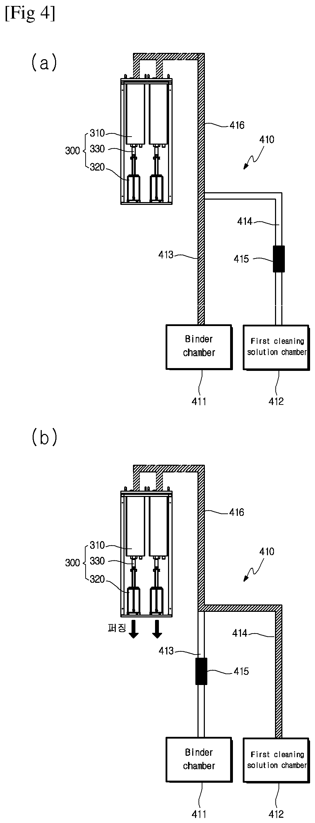

FIGs. 4a and 4b are schematic views showing operations of the module cleaner of the binder jet 3D printer according to the present invention.

During printing, the valve 415 mounted on the second line 414 is closed, and only the binder is supplied along the first line 413 and the integration line 416 to the print head modules 310 and is jetted onto the powder from the print heads 320. During cleaning, the valve 415 mounted on the first line 413 is closed, and only the first cleaning solution is supplied along the second line 414 and the integration line 416 to the print head modules 310. The first cleaning solution is successively supplied to the print head modules 310 to purge the print head modules 310, so that the reservoirs, pumps, and tubes of the print head modules 310 can be easily and perfectly cleaned. As the first cleaning solution is supplied directly to the interiors of the print head modules 310 to clean the print head modules 310, the lifespans of the print head modules 310 and the print heads 320 are greatly increased.

Further, the valves 415 mounted on the respective lines are open and closed manually or automatically. According to the present invention, as mentioned above, one kind of binder and one kind of first cleaning solution are used, but several kinds of binders or cleaning solutions may be used so that they can be easily set through the control in the number of branched lines (first to Nth lines).

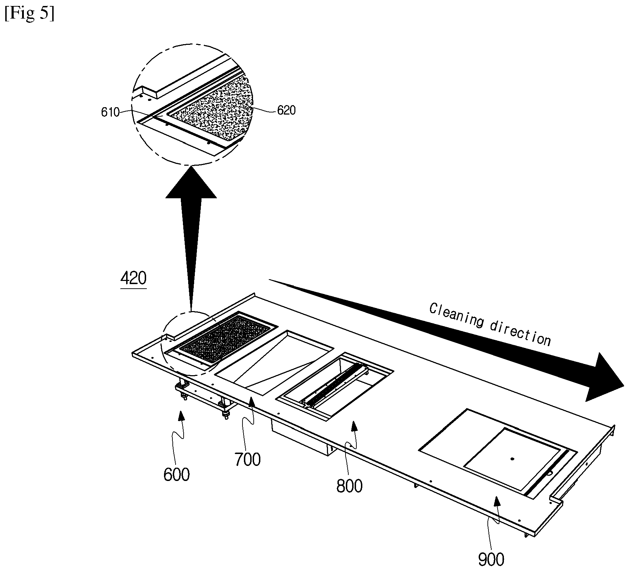

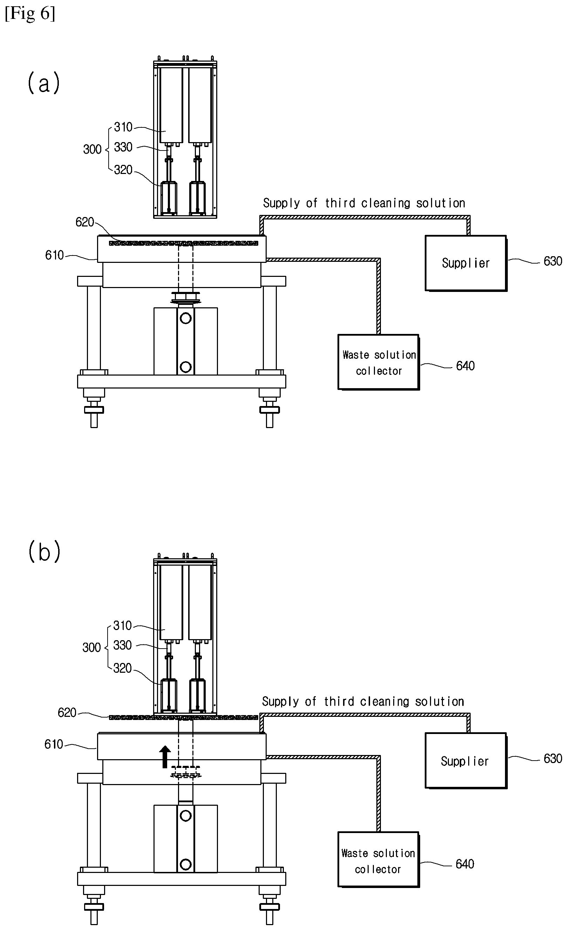

FIG. 5 is a schematic perspective view showing the head cleaner of the binder jet 3D printer according to the present invention, and FIGs. 6a and 6b are schematic views showing the packing part of the binder jet 3D printer according to the present invention.

The head cleaner 420 serves to clean the surfaces of the print heads 320 from which the binder is jetted. According to the present invention, the head cleaner 420 includes a packing part 600, a purging part 700, and a wiping part 800, and a testing part 900.

The packing part 600 serves to pack the print heads 320 to prevent the surfaces of the print heads 320 from being dried. If the printing is not carried out for a long period of time, the binder may be dried on the surfaces of the print heads 320, which causes the nozzles from being blocked. The packing part 600 may be set as a standby position of the printing part 300 during the operation of the printer. Even in the standby state of the printing part 300, the packing part 600 packs the print heads 320 to protect the print heads 320 from drying.

The packing part 600 includes a packing box 610, a packing cover 620, a supplier 630, and a waste solution collector 640.

The packing box 610 is open on top thereof, and the packing cover 620 is ascendably and descendably disposed inside the packing box 610. A third cleaning solution is supplied to the packing cover 620 from the supplier 630, and accordingly, the packing cover 620 is kept in a wet state. The packing cover 620 is formed of a sponge. The third cleaning solution is supplied to the packing box 610 from the supplier 630 through a vacuum pump. Through the vacuum pump, a constant amount of third cleaning solution can be successively supplied to the packing cover 620.

If the printing part 300 is located above the packing box 610, the packing cover 620 is ascended by means of a motor mounted on bottom of the packing box 610 and comes into close contact with the surfaces of the print heads 320 to prevent the nozzles from being blocked due to the dried binder on the surfaces of the print heads 320 while the printing is not carried out. After the packing of the print heads 320, the used third cleaning solution is collected through the waste solution collector 640.

The ascending and descending operations of the packing cover 620 and the supply and collection of the third cleaning solution are automatically performed through a controller.

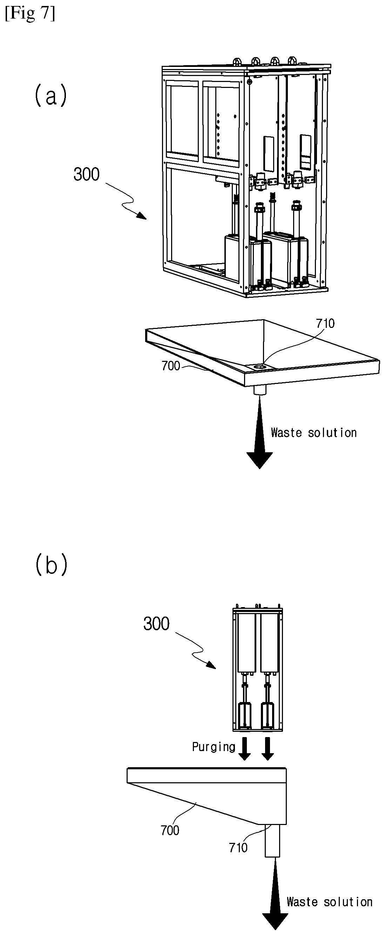

FIGs. 7a and 7b are schematic views showing the purging part of the binder jet 3D printer according to the present invention.

The purging part 700 serves to allow the print heads 320 to purge the binder or cleaning solution at pre-set discharge pressure and discharge flow rate.

The purging part 700 checks the states of the print heads 320 to prevent the amount of material discharged from the print heads 320 from being varied due to the blocked nozzles or the foreign matters remaining on the nozzles.

If the print heads 320 enter the purging part 700, the purging part 700 allows the print heads 320 to discharge the binder or cleaning solution constantly at the pre-set discharge pressure and discharge flow rate, and in this case, the purging part 700 checks the discharging states to ensure the stability of the print heads 320. To check the discharging states, accordingly, the purging part 700 may further include microfibers or a vision inspector.

The purging part 700 has a drain hole 710 formed on the underside thereof and one or more surfaces slant toward the drain hole 710, so that the purged binder or cleaning solution can be discharged through the drain hole 710, without any separate treatment.

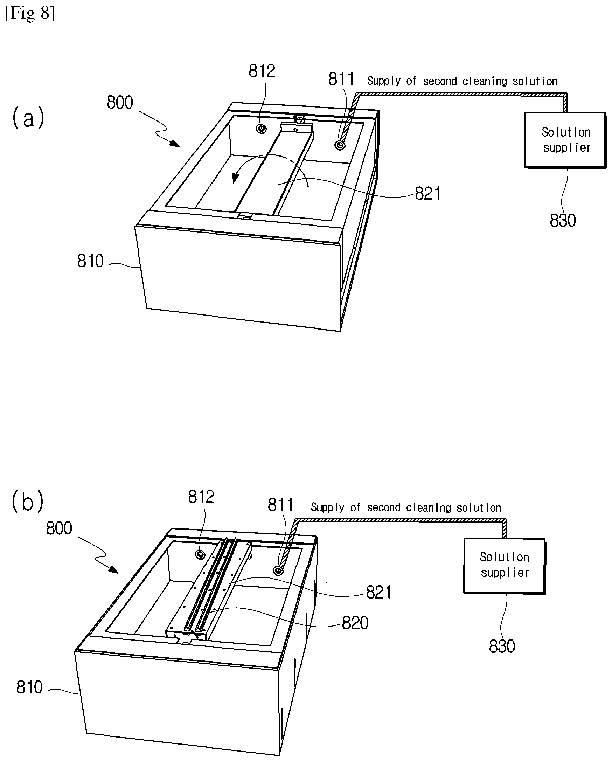

FIGs. 8a and 8b are schematic views showing the wiping part of the binder jet 3D printer according to the present invention.

The wiping part 800 serves to clean the powder or binder remaining on the surfaces of the print heads 320. The wiping part 800 includes a tank 810, wipers 820, and a solution supplier 830.

The tank 810 serves to store a second cleaning solution and has an inlet 811 and an outlet 812. According to the present invention, the outlet 812 is formed above the inlet 811. The second cleaning solution is supplied from the solution supplier 830 by means of a vacuum pump to the tank 810 through the inlet 811. The second cleaning solution successively supplied by a given constant amount by means of the vacuum pump is discharged through the outlet 812 to the outside, so that it can be always maintained to a constant level.

In the conventional technology, the cleaning solution is supplied or discharged manually by a user to or from the tank 810, which causes many inconveniences during the use. If the wipers 820 are covered with a large amount of second cleaning solution, the second cleaning solution may be excessively applied to the surfaces of the print heads 320 during wiping, which has a bad influence on a quality of printing. Accordingly, a given amount of second cleaning solution is desirably maintained in the tank 810, and if the second cleaning solution is supplied or discharged directly by the user, in this case, it is difficult to maintain the second cleaning solution to a constant level in the tank 810. Further, the cleaning for the print heads 320 is not performed only after the printing has been finished. In addition, the print heads 320 are positioned frequently to the maintenance part 400 during the printing, and they are cleaned. Whenever cleaning is performed, accordingly, it is inconvenient and hard that the second cleaning solution is exchanged with new one by the user. Through the vacuum pump, however, the second cleaning solution is successively supplied by a given amount and thus automatically adjusted to a constant level, so that the second cleaning solution in the tank 810 can be always maintained in a clean state.

The wipers 820 are mounted on one surface of a wiper driver 821. Before wiping, the wipers 820 are submerged into the second cleaning solution to remove the foreign matters therefrom. Upon wiping, the wiper driver 821 rotates by 180°, and the printing part 300 performs a reciprocating motion on the wipers 820, so that the foreign matters sticking to the print heads 320 are removed.

In specific, the wipers 820 are mounted on one surface of the wiper driver 821 and before wiping, the wipers 820 are submerged into the second cleaning solution stored in the tank 810. Upon wiping, the wiper driver 821 rotates to allow wipers 820 to face the surfaces of the print heads 320, and the printing part 300 performs the reciprocating motion on the wipers 820.

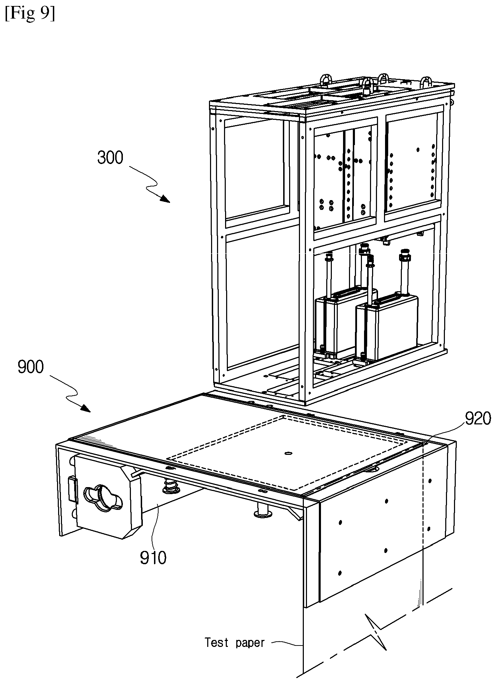

FIG. 9 is a schematic perspective view showing the testing part of the binder jet 3D printer according to the present invention.

The testing part 900 serves to perform a pre-test for checking nozzle conditions for the print heads 320 whose cleaning has been finished.

The testing part 900 rolls test paper onto a supply roller 910 and supplies the test paper to a collection point 920 in a direction of paper supply. During the pre-test, a given image is printed on the test paper to check the nozzle conditions. As a test printing area is pre-set, the printing part 300 prints the given image only on the test printing area.

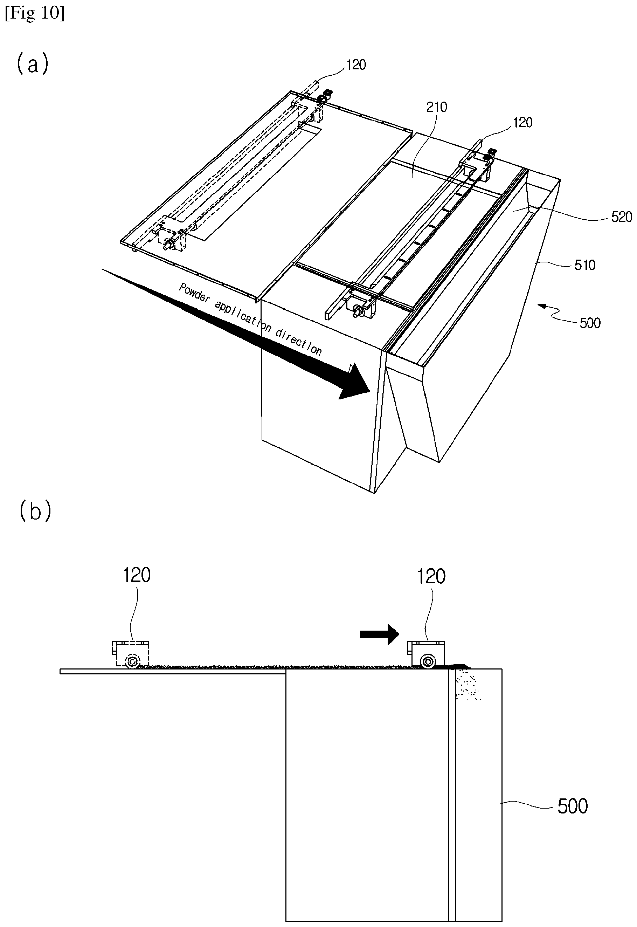

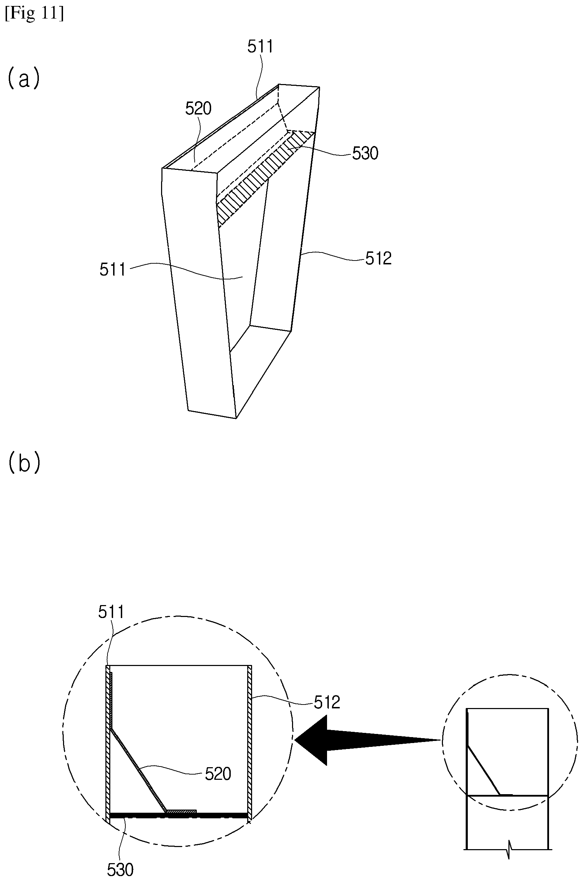

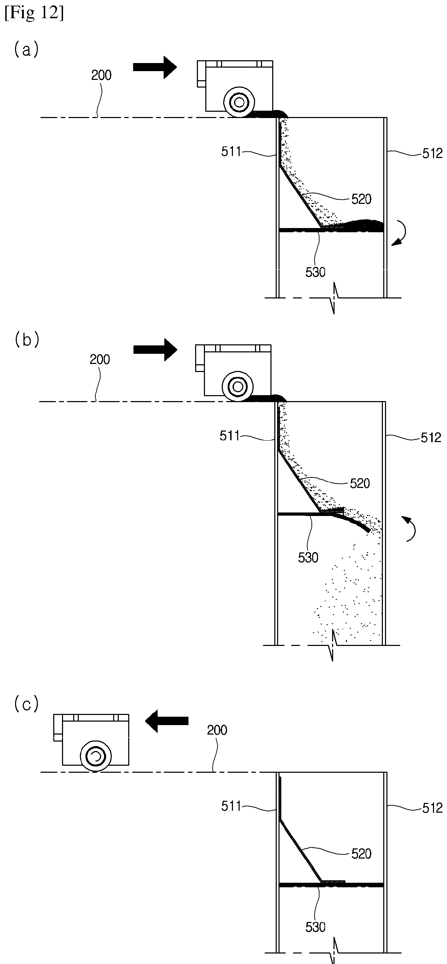

FIGs. 10a to 11b are schematic views showing the powder collecting part of the binder jet 3D printer according to the present invention, and FIGs. 12a to 12c are schematic views showing operations of the powder collecting part of the binder jet 3D printer according to the present invention.

The powder collecting part 500 serves to collect the residual powder after the powder application to the working table 20 and the objet forming stage 210 through the powder applying part 100 has been finished. The powder collecting part 500 includes a powder collecting container 510, a guide 520, and an elastic member 530.

The powder collecting container 510 is mounted on the front side of the object forming chamber 200 along a powder applying direction.

According to the present invention, the powder collecting container 510 has a gradually reduced section toward the lower portion thereof, but it is not necessarily limited thereto. Further, the powder collecting container 510 is open on top thereof to allow the residual powder to be dropped thereto.

With the development of the binder jet 3D printer technology, a large-area object becomes produced, and accordingly, an amount of powder used is drastically increased. An amount of residual powder after the powder application onto the object forming stage 210 has been finished is accordingly increased, and in this case, of course, the powder collecting container 510 may be increased in size and volume.

In a process where the residual powder is dropped (poured) into the powder collecting container 510 through the powder applying device 100, the residual powder as fine powder can scatter to generate lots of dust. The dust sticks to the print head modules 310 and the print heads 320 to undesirably cause problems during the printing and to require more frequent cleaning. As the powder collecting container 510 has a high depth, in this case, an amount of dust generated may be increased.

According to the present invention, accordingly, the guide 520 and the elastic member 530 are provided to minimize the amount of dust generated during the dropping process of the residual powder to the powder collecting container 510.

The guide 520 has one end mounted on an inner surface 511 of the powder collecting container 510 and the other end spaced apart from an opposing surface 512 of the powder collecting container 510. In this case, the inner surface 511 represents the other surface to one surface mounted on the frame. The opposing surface 512 represents the surface facing the inner surface 511. The guide 520 is mounted on the upper portion of the powder collecting container 510 and has a downward inclination from one end thereof toward the other end thereof.

The elastic member 530 is located underneath the guide 520, and according to the present invention, the elastic member 530 comes into close contact with the underside of the guide 520. The elastic member 530 has one end mounted on the inner surface 511 of the powder collecting container 510 and the other end coming into close contact with the opposing surface 512 of the powder collecting container 510. The elastic member 530 desirably comes into close contact with the opposing surface 512, while allowing the powder collecting container 510 to be partitioned into upper and lower portions.

As the guide 520 is mounted on the upper portion of the powder collecting container 510, accordingly, the residual powder dropped to the powder collecting container 510 comes into contact with the guide 520, and in this case, the dropping height is low to thus minimize an amount of dust generated. Through the specific shape of the guide 520, further, the dust generated is guided to the elastic member 530.

Through the guide 520, next, the residual powder is accumulated on top of the elastic member 530. In specific, the residual powder is accumulated on top of the other end of the elastic member 530. The weight of the residual powder accumulated on top of the elastic member 530 changes the other end of the elastic member 530 in position, and accordingly, a gap is formed between the other end of the elastic member 530 and the opposing surface 512 of the powder collecting container 510. In more specific, the other end of the elastic member 530 becomes slant by the weight of the residual powder to form the gap with respect to the opposing surface 512 of the powder collecting container 510, and through the gap, the residual powder is dropped to the bottom of the powder collecting container 510. If a force (weight of residual powder) applied to top of the elastic member 530 is less than a given level through the dropping of the residual powder, the other end of the elastic member 530 is returned to its original position by means of its restoring force and thus comes into close contact with the opposing surface 512 of the powder collecting container 510 to seal the powder collecting container 510, so that the residual powder is sealedly stored in the powder collecting container 510, thereby minimizing the amount of dust generated.

When the residual powder is collected, accordingly, an amount of dust generated can be minimized through the position and shape of the guide 520 and the position and size of the elastic member 530, without having any separate components.

According to the present invention, the elastic member 530 is a plate made of a rubber material, but it is not necessarily limited thereto. That is, the same functions as the elastic member 530 can be obtained through a separate structure.

As mentioned above, the binder jet 3D printer according to the present invention can easily and perfectly clean both of the interiors of the print head modules and the print heads and can prevent the residual powder being dropped to the powder collecting container from scattering when the residual powder is collected to the powder collecting container after the powder application to the object forming stage through the powder applying part has been finished.

In the description, all examples or exemplary terms (for example, and the like) are used just to explain the present invention, and therefore, they do not limit the scope of the present invention unless they are limited by the appended claims. Further, it will be appreciated to one skilled in the art that the present invention may be configured according to design conditions and factors within the scope of the claims or their equivalents to which variations, combination, and modification are added.

Although the present invention has been described with an exemplary embodiment, various changes and modifications may be suggested to one skilled in the art. It is intended that the present disclosure encompass such changes and modifications as fall within the scope of the appended claims.

### [Industrial Applicability]

According to the present invention, the binder jet 3D printer is configured to easily and perfectly clean both of the interiors of the print head modules and the print heads and to prevent the residual powder being dropped to the powder collecting container from scattering when the residual powder is collected to the powder collecting container after the powder application to the object forming stage through the powder applying part has been finished.

## Claims

1. A binder jet 3D printer comprising:
an object forming chamber open on top thereof to form an internal space and having an object forming stage ascendable and descendable in the internal space to laminate powder to a plurality of layers through a binder jetted from a printing part;
a powder applying part for applying the powder from a hopper onto the object forming stage;
a powder collecting part disposed on the front side of the object forming chamber along a powder applying direction of the powder applying part to collect residual powder after application of the powder through the powder applying part has been finished; and
a maintenance part for cleaning the printing part and having a head cleaner and a module cleaner,
wherein the module cleaner comprises a binder chamber for storing the binder, a first cleaning solution chamber for storing a first cleaning solution, a first line through which the binder is supplied to print head modules of the printing part, a second line through which the first cleaning solution is supplied to the print head modules, and valves mounted on the first line and the second line, respectively to selectively open and close the first line and the second line.

2. The binder jet 3D printer according to claim 1, wherein the head cleaner comprises a wiping part having a tank for storing a second cleaning solution and having an inlet and an outlet, wipers selectively submerged into the second cleaning solution, and a solution supplier for supplying the second cleaning solution to the tank through the inlet.

3. The binder jet 3D printer according to claim 2, wherein the outlet is formed above the inlet.

4. The binder jet 3D printer according to claim 2, wherein the head cleaner comprises a packing part having a packing box open on top thereof, a packing cover ascendably and descendably disposed inside the packing box and coming into close contact with the surfaces of the print heads when ascended, and a supplier for supplying a third cleaning solution to the packing cover.

5. The binder jet 3D printer according to claim 1,
A binder jet 3D printer comprising:
an object forming chamber open on top thereof to form an internal space and having an object forming stage ascendable and descendable in the internal space to laminate powder to a plurality of layers through a binder jetted from a printing part;
a powder applying part for applying the powder from a hopper onto the object forming stage;
a powder collecting part disposed on the front side of the object forming chamber along a powder applying direction of the powder applying part to collect residual powder after application of the powder through the powder applying part has been finished; and
a maintenance part for cleaning the printing part,
wherein the powder collecting part comprises a powder collecting container mounted on the front side of the object forming chamber and open on top thereof, a guide having one end mounted on an inner surface of the powder collecting container and the other end spaced apart from an opposing surface to the inner surface of the powder collecting container, while having a downward inclination, and an elastic member located underneath the guide and having one end mounted on the inner surface of the powder collecting container and the other end coming into close contact with the opposing surface of the powder collecting container.

6. The binder jet 3D printer according to claim 5, wherein the other end of the elastic member is varied in position according to the weight of the residual powder accumulated on top thereof to allow the residual powder to be dropped to the powder collecting container and, after the residual powder is dropped, the other end of the elastic member is returned to an original position thereof and comes into close contact with the opposing surface of the powder collecting container.

7. The binder jet 3D printer according to claim 6, wherein the elastic member is a plate made of a rubber material.
